# FASCICULE DE BREVET EUROPEEN

(11) **EP 0 481 857 B1**
(45) Date de publication et mention de la délivrance du brevet: **03.05.1995**
(21) Numéro de dépôt: 91402723.0
(22) Date de dépôt: 11.10.1991
(51) Int. Cl.: B64G 1/66, F16C 25/08, F16C 41/04

(54) **Mécanisme rotatif de véhicule spatial à système de gerbage intégré**
Drehgelenk für Raumfahrzeug mit einem integriertem Stapelsystem
Rotary mechanism for a spacecraft with an integrated stacking system

(30) Priorité: 15.10.1990 FR 9012677
(43) Date de publication de la demande: 22.04.1992
(73) Titulaire: AEROSPATIALE Société Nationale Industrielle, 75781 Paris Cédex 16 (FR)
(72) Inventeur: Schoeffter, Jean-Pierre, F-06370 Mouans Sartoux (FR)
(74) Mandataire: Poulin, Gérard

(56) Documents cités:
- FR-A- 2 648 200
- GB-A- 2 069 629
- US-A- 3 985 209
- US-A- 4 961 654
- PATENT ABSTRACTS OF JAPAN, vol. 6, no. 36 (M-115)[914], 5 mars 1982;
- & JP-A-56 150 614 (NIPPON SEIKO K.K.) 21-11-1981

## Description

L'invention concerne un mécanisme rotatif constituant une partie d'un véhicule spatial ou embarqué sur ce véhicule, ce mécanisme étant équipé de moyens de gerbage intégrés qui empêchent toute rotation pendant la phase de lancement du véhicule, mais peuvent ensuite être libérés pour permettre le fonctionnement normal du mécanisme.

Les véhicules spatiaux tels que les satellites artifiels et les stations orbitales comportent des équipements tels que des panneaux solaires, des antennes, etc. qui comprennent des mécanismes permettant des rotations relatives entre les pièces qui les constituent, lorsque le véhicule est sur orbite. Ces mécanismes comportent le plus souvent des roulements à billes, mais ils peuvent aussi comprendre des systèmes vis/écrous ou des roulements de type différent.

Lors du lancement des véhicules spatiaux, ces différents mécanismes sont soumis à des sollicitations mécaniques élevées. Dans le cas des roulements à billes, les efforts sont transmis d'une bague à l'autre en passant par les billes. La présence ou l'apparition d'un jeu au cours de cette phase de lancement conduirait donc à des chocs entre les billes et les bagues, entraînant des dégradations de surface qui, à terme, auraient pour conséquence un mauvais fonctionnement, puis la détérioration du roulement.

Afin d'éviter toute apparition de jeu dans ces mécanismes lors du lancement, on leur applique donc habituellement une précharge. Cependant, cette absence de jeu peut ne plus être nécessaire en mode opérationnel et constituer au contraire une contrainte pénalisant les performances du mécanisme.

D'autre part, les caractéristiques dimensionnelles des roulements sont déterminées par les spécialistes en fonction des charges maximum que ces roulements supportent. Dans le cas d'un roulement embarqué sur un véhicule spatial, l'importance des efforts qui lui sont appliqués au moment du lancement conduit à donner à ce roulement des dimensions et, par conséquent, une masse qui ne sont généralement pas admises sur un tel véhicule.

Par conséquent, on a également l'habitude de relier les pièces en mouvement des mécanismes, ou les éléments liés à ces pièces, par un organe rigide de gerbage par lequel sont transmises une partie des charges engendrées lors du lancement. Cet organe rigide est rompu par une commande pyrotechnique lorsque le véhicule spatial arrive dans des conditions opérationnelles. Cependant, l'utilisation d'une commande pyrotechnique ne permet pas de disposer l'organe de gerbage à proximité immédiate du roulement, de sorte qu'une partie non négligeable des charges engendrées lors du Lancement continue à transiter par ce dernier. La taille et la masse du roulement ne peuvent donc pas être optimisées, ce qui constitue un handicap appréciable compte tenu de l'intérêt présenté par tout gain en volume et en poids sur un véhicule spatial.

Le document EP-A-0 466 993, qui fait partie de l'état de la technique au sens de l'Article 54(3) CBE, décrit un dispositif permettant de relâcher une précharge appliquée initialement sur un mécanisme tel qu'un roulement embarqué sur un véhicule spatial. Ce dispositif, qui agit par exemple sur les bagues intérieures d'un ensemble de roulement, comporte un organe en un matériau à mémoire de forme et une résistance chauffante dont la mise sous tension fait franchir à cet organe sa température de changement de forme.

Le document US-A-3.985 209 décrit un dispositif de gerbage entre deux pièces aptes à être animées d'une rotation relative. L'une des pièces comprend une cuvette annulaire qui contient un métal fusible tel que du gallium, dans lequel plonge une partie de l'autre pièce. La fusion du métal, produite par un élément chauffant, autorise la rotation relative des pièces.

La présente invention a précisément pour objet un mécanisme rotatif de véhicule spatial dont les moyens de gerbage sont libérés sans avoir recours à une commande pyrotechnique, ce qui permet d'intégrer les moyens de gerbage dans le mécanisme et de placer ces moyens de gerbage à proximité immédiate des bagues des roulements dans le cas où le mécanisme comprend de tels roulements ; les charges qui transitent par les surfaces en contact du mécanisme rotatif lors de la phase de lancement sont ainsi pratiquement supprimées, de telle sorte que, dans le cas où le mécanisme comprend des roulements, la taille et la masse de ces derniers sont sensiblement réduites par rapport aux mécanismes existants, et qu'un jeu ou une très faible précharge peut être appliqué à volonté sur le mécanisme en mode opérationnel.

Selon l'invention, ce résultat est obtenu au moyen d'un mécanisme rotatif de véhicule spatial, comprenant une pièce intérieure et une pièce extérieure aptes à être animées, après une phase de lancement du véhicule, d'un mouvement de rotation relative, ce mécanisme comprenant des moyens de gerbage empêchant toute rotation relative entre lesdites pièces pendant la phase de lancement, et des moyens de libération des moyens de gerbage, après la phase de lancement, caractérisé par le fait que les moyens de libération comprennent un organe en un matériau à mémoire de forme commandant le relâchement des moyens de gerbage, lors du franchissement d'une température de changement de structure cristalline de ce matériau.

L'utilisation d'un organe en un matériau à mémoire de forme pour assurer la libération des moyens de gerbage permet de placer ces derniers à l'intérieur même du mécanisme rotatif et à proximité immédiate des surfaces en contact de ce mécanisme. Les charges transmises par ce dernier pendant la phase de lancement du véhicule spatial sont donc pratiquement annulées, de sorte que son dimensionnement et ses caractéristiques peuvent être déterminés en tenant uniquement compte de la charge qu'il supporte en mode opérationnel. Sa taille et sa masse peuvent donc être minimisées, ce qui constitue un avantage appréciable sur un véhicule spatial. De plus, le mécanisme peut être conçu pour présenter un jeu ou une très faible précharge en mode opérationnel, pour satisfaire aux conditions de fonctionnement imposées.

Il est rappelé qu'un matériau à mémoire de forme est un matériau qui présente deux phases cristallines stables, respectivement austénitique et martensitique, selon que sa température est supérieure ou inférieure à la température de transformation structurale caractéristique de ce matériau. Lorsque le matériau en phase martensitique est soumis à une contrainte mécanique, il est déformé plastiquement et conserve cette déformation tant que la température reste inférieure à sa température de transformation structurale ou de changement de phase. Dès que la température devient supérieure à ce seuil, la structure redevient austénitique et le matériau reprend sa forme initiale.

Le changement de forme du matériau engendré par le franchissement de la température de changement de phase peut notamment consister en un allongement. L'organe en matériau à mémoire de forme agit alors comme un vérin qui est calé avant le lancement à une dimension calculée, pour laquelle le gerbage du mécanisme est possible.

Le chauffage du matériau à mémoire de forme, qui peut être assuré soit par un moyen de chauffage tel qu'une résistance électrique disposée à proximité de l'organe en matériau à mémoire de forme, soit au moyen de l'énergie solaire, allonge cet organe, ce qui a pour effet de rendre au mécanisme sa liberté de rotation.

Dans un mode de réalisation préféré de l'invention, au moins un roulement comprenant une bague intérieure et une bague extérieure est placé entre les pièces, et les moyens de gerbage agissent directement sur les bagues intérieure et extérieure de ce roulement, qui peut notamment être un roulement à billes.

Les moyens de gerbage peuvent alors comprendre un manchon, disposé de façon concentrique autour d'un prolongement de la pièce intérieure, de façon à être comprimé axialement entre la bague extérieure du roulement et des moyens de serrage prenant appui sur la pièce intérieure qui supporte la bague intérieure du roulement.

Dans ce cas, l'organe en matériau à mémoire de forme est monté entre le manchon et le prolongement de la pièce intérieure, de façon à prendre appui sur ce prolongement pour en commander l'allongement, lors du franchissement de la température de changement de phase.

Avantageusement, le manchon est en appui sur la bague extérieure du roulement par l'intermédiaire d'un flasque fixé sur la pièce extérieure, le manchon et le flasque coopérant par des portées coniques complémentaires. Le manchon coopère en outre par un alésage avec une portée cylindrique formée sur une partie du prolongement de la pièce intérieure située à proximité immédiate du roulement.

De plus, pour faciliter le découplage entre la pièce extérieure et la bague extérieure du roulement, cette dernière est montée dans un alésage de la pièce extérieure par l'intermédiaire d'un joint élastique de découplage.

Dans un mode de réalisation préféré de l'invention, le mécanisme comprend deux roulements comportant chacun une bague extérieure et une bague intérieure ; deux moyens de gerbage montés en opposition et agissant directement entre chacune des bagues extérieures et la pièce intérieure sur laquelle est fixée l'une des bagues intérieures, l'autre bague intérieure étant apte à glisser axialement sur la pièce intérieure ; et deux organes en matériau à mémoire de forme, respectivement associés à chacun des moyens de gerbage.

On décrira maintenant, à titre d'exemple non limitatif, un mode de réalisation particulier de l'invention, en se référant aux dessins annexés, dans lesquels :

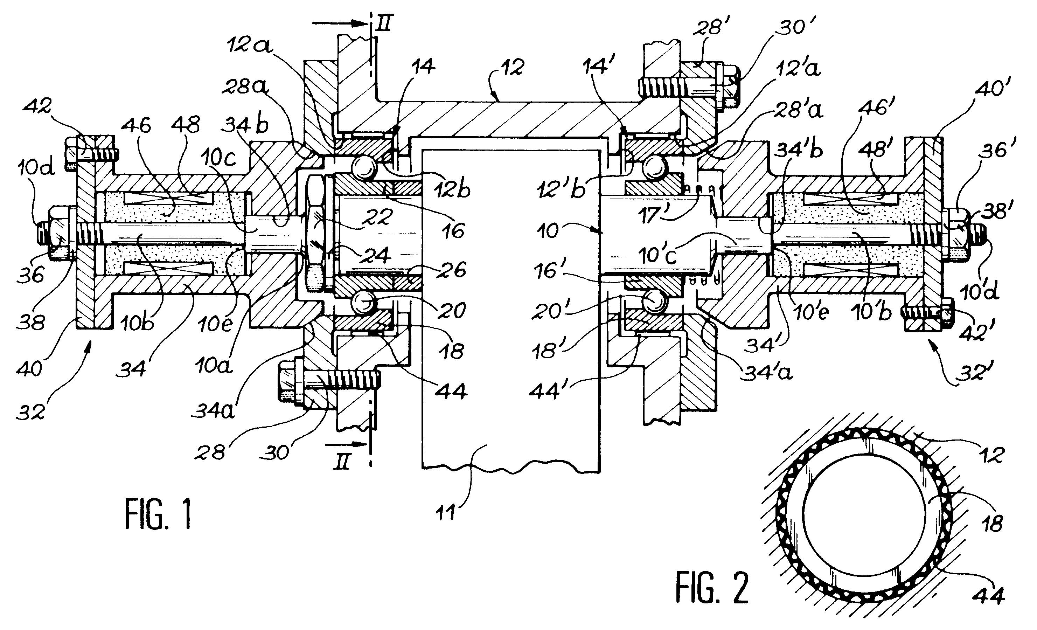

- la figure 1 est une vue en coupe longitudinale d'un mécanisme rotatif embarqué sur un véhicule spatial, muni de deux roulements à billes présentant un jeu axial et un jeu radial en mode opérationnel, un dispositif de gerbage étant associé à chacun de ces roulements, le dispositif situé sur le côté gauche de la figure étant représenté dans la configuration de gerbage qu'il occupe lors du lancement et le dispositif situé sur le côté droit de la figure étant représenté dans la configuration libérée qu'il occupe en mode opérationnel ; et
- la figure 2 est une vue en coupe selon la ligne II-II de la figure 1.

Le mécanisme représenté sur la figure 1 est, par exemple, une charnière ou une articulation d'un panneau solaire, d'une antenne ou de tout autre mécanisme équipant un satellite ou une station orbitale.

Cette articulation comprend un arbre 10, supposé fixe dans le mode de réalisation représenté, et une chape extérieure 12 montée tournante sur l'arbre 10 par l'intermédiaire de deux roulements à billes 14 et 14′. Les roulements 14 et 14′ sont placés de part et d'autre d'une chape fixe 11 solidaire de l'arbre 10.

Chacun des roulements 14 et 14′ comprend respectivement une bague intérieure 16, 16′, une bague extérieure 18, 18′ et des billes 20, 20′ roulant entre les bagues.

La bague intérieure 16 du roulement 14 est montée bloquée sur l'arbre 10 au moyen d'un écrou 22 vissé sur une partie filetée 10a de l'arbre 10 et agissant sur la bague intérieure 16 par l'intermédiaire d'une rondelle d'appui 24, une entretoise 26 étant interposée entre la bague intérieure 16 et la chape fixe 11.

La bague intérieure 16′ du roulement 14′ est montée sur l'arbre 10 par un ajustement glissant qui lui permet de se déplacer axialement sur l'arbre 10 pour tenir compte des dilatations, tout en rendant cette bague 16′ solidaire en rotation de l'arbre 10.

Un ressort hélicoïdal de compression 17′, dont l'agencement sera décrit plus en détail par la suite, prend appui sur la face latérale de la bague intérieure 16′ opposée à la chape fixe 11, afin d'exercer sur cette bague une légère précontrainte assurant en permanence son maintien en position à l'intérieur de la bague extérieure 18′.

Chacune des bagues extérieures 18 et 18′ des roulements 14 et 14′ est montée dans un alésage 12a, 12′a de la chape tournante 12, entre un épaulement 12b, 12′b, formé dans cet alésage et un flasque 28, 28′ fixé sur la face extérieure correspondante de la chape tournante 12, par exemple au moyen de vis 30, 30′. Ce montage est tel que les bagues extérieures 18 et 18′ disposent d'un très faible jeu parallèlement à l'axe de l'arbre 10 (environ 0,01 mm) et d'un jeu sensiblement plus important selon une direction orientée radialement par rapport à cet axe (environ 1 mm).

Dans la partie de sa surface extérieure située en face de la bague extérieure correspondante 18 et 18′, chacun des flasques 28, 28′ présente une portée conique femelle 28a, 28′a. Lorsque les flasques 28, 28′ sont fixés sur la chape tournante 12, les portées coniques 28a et 28′a sont parfaitement concentriques aux alésage 12a et 12′a formés dans cette chape (concentricité voisine de 0,005 mm).

Conformément à l'invention, des moyens de gerbage 32, 32′ montés en opposition sont associés directement aux roulements 14 et 14′, afin que tous les efforts engendrés lors du lancement transitent entre l'arbre 10 et la chape 12 au travers de ces moyens de gerbage, et non au travers des billes 20, 20′ des roulements.

Chacun de ces moyens de gerbage 32, 32′ comprend un manchon cylindrique 34, 34′ qui est disposé de façon concentrique autour d'un prolongement 10b, 10′b, de diamètre réduit, de l'arbre 10. A son extrémité adjacente au flasque 28, 28′ chacun des manchons 34, 34′ comporte une portée conique mâle 34a, 34′a complémentaire de la portée conique femelle 28a, 28′a du flasque correspondant. Cette même extrémité de chacun des manchons 34 et 34′ est traversée par un alésage 34b, 34′b qui est reçu sans jeu sur une partie du prolongement 10b, 10′b de l'arbre 10 formant une portée cylindrique 10c, 10′c. L'alésage 34b, 34′b et la portée cylindrique 10c, 10′c subissent un traitement adéquat empêchant le grippage.

L'usinage de chacun des manchons 34 et 34′ est réalisé de telle sorte que les portées coniques 34a et 34′a soient parfaitement concentriques à l'arbre 10 lorsque les manchons sont montés sur cet arbre.

Comme l'illustre la figure 1, le ressort 17′ est interposé entre la bague intérieure 16′ du roulement 14′ et le fond d'un lamage formé sur la face en regard du manchon 34′.

Chacun des moyens de gerbage 32 et 32′ comprend de plus des moyens de serrage qui prennent appui sur l'arbre 10 pour exercer sur les manchons 34, 34′ un effort axial appliquant les portées coniques 34a, 34′a de ces manchons contre les portées coniques 28a, 28′a des flasques 28 et 28′.

Dans le mode de réalisation illustré sur la figure 1, ces moyens de serrage comprennent un écrou 36, 36′ vissé sur l'extrémité filetée 10d, 10′d du prolongement 10b, 10′b de l'arbre 10. Cet écrou 36, 36′ prend appui, par l'intermédiaire d'une rondelle d'appui 38, 38′, sur une plaque 40, 40′ fixée à l'extrémité du manchon 34, 34′ tournée vers l'extérieur du mécanisme, par exemple au moyen de vis 42, 42′.

Sous l'effet de la coopération des portées coniques 28a et 34a d'une part, 28′a et 34′a d'autre part, l'effort axial exercé par les manchons 34, 34′ sur les flasques 28, 28′ lors du serrage des écrous 36, 36′ est transformé en un effort radial. Cet effort radial a simultanément pour effet de rendre concentriques les bagues internes fixes 16, 16′ et les bagues externes mobiles 18, 18′, tout en les solidarisant solidement entre elles.

Dans les roulements de précision, le jeu radial existant entre la bague extérieure du roulement et l'alésage dans laquelle cette bague est reçue est limité à une valeur très faible, généralement inférieure ou égale à 10 »m. Dans le cas présent, un tel jeu conduirait à un montage hyperstatique. Pour cette raison, on a vu précédemment que les bagues extérieures 18, 18′ des roulements sont reçues avec un jeu radial important (environ 1 mm) dans les alésages 12a, 12′a. Ce jeu radial important permet de placer entre chacune des bagues extérieures 18, 18′ et l'alésage 12a, 12′a correspondant un joint élastique 44, 44′ dont la forme apparaît plus explicitement sur la figure 2. Ce joint élastique de précision, appelé anneau Borelly, est constitué par un feuillard métallique qui serpente entre l'alésage 12a, 12′a et la surface extérieure de la bague extérieure 18, 18′.

Les joints élastiques 44, 44′ ont la propriété de découpler les bagues extérieures 18, 18′ et les billes 20, 20′ lorsque le mécanisme subit des vibrations. De ce fait, les charges dues au lancement transitent de la chape mobile 12 à la chape fixe 11 solidaire de l'arbre 10 sans passer par les billes 20, 20′ roulant entre les bagues fixe 16, 16′ et mobile 18, 18′ des roulements.

Cependant, les joints élastiques 44, 44′ sont suffisamment rigides pour assurer la précision de positionnement et la raideur nécessaires sous l'effet des sollicitations orbitales. En effet, les charges induites par ces sollicitations orbitales sont très faibles en regard des charges produites lors du lancement.

Chacun des moyens de gerbage 32, 32′ est équipé de moyens de libération permettant, en phase opérationnelle, de supprimer l'action de ces moyens de gerbage.

Conformément à l'invention, ces moyens de libération comprennent un organe, présentant la forme d'une entretoise tubulaire 46, 46′, réalisée en un matériau à mémoire de forme. Chacune des entretoises tubulaires 46, 46′ est placée coaxialement à l'intérieur du manchon 34, 34′ autour du prolongement 10b, 10′b de l'arbre 10, entre la plaque 40, 40′ et un épaulement 10e, 10′e formé sur l'arbre 10 entre le prolongement 10b et la portée cylindrique 10c.

Le côté gauche de la figure 1 illustre la position de montage au sol du mécanisme, qui reste inchangée pendant toute la durée du lancement du véhicule spatial sur lequel est embarqué ce mécanisme. Dans cette position, il existe un jeu axial entre l'entretoise tubulaire 46, 46′ et le manchon 34, 34′. Par conséquent, l'effort axial nécessaire à la suppression du mouvement relatif entre les chapes fixe 11 et mobile 12 obtenu par le serrage de l'écrou 36, 36′ n'est pas supporté par l'entretoise 46, 46′ en matériau à mémoire de forme.

Pour la réalisation de l'entretoise tubulaire 46, 46′, on choisit un matériau à mémoire de forme convenable, en fonction des conditions d'utilisation, en tenant compte en particulier de la température de changement de phase de l'alliage. De façon nullement limitative, on citera parmi les matériaux à mémoire de forme utilisables dans l'invention des alliages à base de fer (Fe-C, Fe-Cr, Fe-Ni, etc.), des alliages de cuivre ou de métaux nobles (Cu-Zn, Cu-Sn, Cu-Al, Cu-Zn-Al, Cu-Zn-Al-Ni, Cu-Al-Ni, Ag-Cd, Au-Cd, etc.), des alliages à base de titane et/ou de nickel (Ni-Ti, Ni-Ti-Fe, Ni-Al, etc.) et certains métaux purs (Co, Ti, Na).

Dans le mode de réalisation illustré sur les figures, le chauffage de l'entretoise tubulaire 46, 46′ jusqu'à la température de transformation du matériau à mémoire de forme est obtenu au moyen d'un dispositif de chauffage constitué, par exemple, par une résistance électrique 48, 48′ bobinée directement autour de l'entretoise 46, 46′. Des conducteurs électriques (non représentés) permettent de relier cette résistance électrique 48, 48′ à une source de courant électrique (non représentée) embarquée sur le véhicule, par l'intermédiaire d'un interrupteur (non représenté) ouvert lors du lancement.

Lorsqu'un ordre de fermeture de cet interrupteur est émis, l'entretoise 46, 46′ en matériau à mémoire de forme est chauffée jusqu'à une température supérieure à sa température de transformation structurale. La structure de ce matériau redevient donc austénitique, ce qui a pour effet de lui faire reprendre sa forme initiale qui, dans ce cas, correspond à une plus grande longueur de l'entretoise 46, 46′.

Comme l'illustre le côté droit de la figure 1, un dimensionnement adéquat des différentes pièces constituant le mécanisme a pour effet, lors de l'allongement de chacune des entretoises 46, 46′, de provoquer un allongement permanent du prolongement 10b, 10′b de l'arbre 10, par suite de la venue en appui de l'entretoise 46, 46′ sur les plaques 40, 40′ et sur les épaulements 10e, 10′e. Cet allongement de chacun des prolongements 10b, 10′b de l'arbre 10 est contrôlé en donnant à ces prolongements un diamètre réduit calibré par rapport au diamètre présenté par ailleurs par l'arbre 10.

Sous l'effet de cet allongement permanent des prolongements 10b et 10′b de l'arbre 10, la contrainte appliquée initialement entre les chapes fixe 11 et mobile 12 est relâchée et un jeu apparaît entre les portées coniques 28a et 34a d'une part, 28b et 34b d'autre part, du manchon 34, 34′ et du flasque 28, 28′.

Bien entendu, le montage qui vient d'être décrit peut être inversé, c'est-à-dire que l'arbre 10 peut être un arbre tournant et la chape 12 une chape fixe. Les moyens de gerbage 32 et 32′, ainsi que les moyens de libération de ces moyens de gerbage constitués par les entretoises 46 et 46′ en matériau à mémoire de forme sont utilisés de la même manière, en association avec chacun des roulements 14 et 14′.

Conformément à l'invention, on réalise par des moyens simples et peu encombrants un gerbage de mécanisme rotatif trés efficace, car situé directement au niveau de ce mécanisme et notamment des roulements lorsque ce dernier en comprend. Ce gerbage permet, d'une part, de supprimer le gerbage pyrotechnique classique souvent nécessaire et, d'autre part, de réaliser un gain d'encombrement et de masse pouvant être considérable. Ce gain permet notamment l'emploi de roulements dans des configurations pour lesquelles cet emploi était impossible précédemment. Parmi ces configurations dans lesquelles l'invention permet l'emploi de roulements, on trouve le cas d'un mécanisme devant présenter un encombrement très limité dans le sens radial et le cas de roulements implantés dans un mécanisme devant supporter des charges de lancement très importantes, qui auraient conduit à des dimensions inacceptables sans le dispositif selon l'invention.

De plus, la précharge qui devait auparavant être appliquée avec précision sur les mécanismes avant le lancement étant supprimée, la procédure de montage peut être simplifiée de façon appréciable. En effet, les efforts nécessaires au gerbage ne réclament aucune précision.

Par ailleurs, les avantages inhérents au matériau à mémoire de forme s'ajoutent à ces avantages. Ainsi, la fiabilité d'un mécanisme ainsi commandé est totale, son fonctionnement n'engendre ni chocs, ni pollution, et son encombrement est très faible.

Bien entendu, l'invention n'est pas limitée au mode de réalisation qui vient d'être décrit à titre d'exemple, mais en couvre toutes les variantes dans le cadre des revendications. Comme on l'a déjà observé, son application n'est pas limitée aux roulements à billes. Dans le même esprit, la structure des moyens de gerbage peut également être différente de celle qui a été décrite, de même que la forme de la pièce en matériau à mémoire de forme. En outre, le changement de forme de ce matériau peut dans certains cas être commandé par l'énergie solaire, de sorte que le moyen de chauffage qui lui est associé dans le mode de réalisation décrit est supprimé. Enfin, la rotation relative entre les deux parties du mécanisme peut être illimitée ou, au contraire, limitée à des angles inférieurs à 360°.

## Revendications

1. Mécanisme rotatif de véhicule spatial, comprenant une pièce intérieure (10) et une pièce extérieure (12) aptes à être animées, après une phase de lancement du véhicule, d'un mouvement de rotation relative, ce mécanisme comprenant des moyens de gerbage (32,32') empêchant toute rotation relative entre lesdites pièces pendant la phase de lancement, et des moyens de libération (46,46') des moyens de gerbage, après la phase de lancement, caractérisé par le fait que les moyens de libération comprennent un organe (46,46') en un matériau à mémoire de forme commandant le relâchement des moyens de gerbage, lors du franchissement d'une température de changement de structure cristalline de ce matériau.

2. Mécanisme selon la revendication 2, caractérisé par le fait qu'au moins un roulement (14,14') comprenant une bague intérieure (16,16') et une bague extérieure (18,18') étant placé entre lesdites pièces (10,12), les moyens de gerbage (32,32') agissent directement sur les bagues intérieure et extérieure du roulement.

3. Mécanisme selon la revendication 2, caractérisé par le fait que le roulement (14,14') est un roulement à billes.

4. Mécanisme selon l'une quelconque des revendications 2 et 3, caractérisé par le fait que les moyens de gerbage (32,32') comprennent un manchon (34,34') disposé de façon concentrique autour d'un prolongement (10b,10'b) de la pièce intérieure (10), de façon à être comprimé axialement entre la bague extérieure (18,18') du roulement et des moyens de serrage (36,36') prenant appui sur la pièce intérieure qui supporte la bague intérieure du roulement.

5. Mécanisme selon la revendication 4, caractérisé par le fait que l'organe (46,46') en matériau à mémoire de forme est monté entre ledit manchon (34,34′) et le prolongement (10b,10′b) de la pièce intérieure, de façon à prendre appui sur ce prolongement pour en commander l'allongement, lors du franchissement de ladite température de changement de phase.

6. Mécanisme selon la revendication 5, caractérisé par le fait que des moyens de chauffage (48,48′) sont également placés entre le manchon (34,34′) et le prolongement (10b,10′b) de la pièce intérieure, pour assurer à l'organe (46,46′) en matériau à mémoire de forme le franchissement de ladite température, lorsque ces moyens de chauffage sont actionnés.

7. Mécanisme selon l'une quelconque des revendications 4 à 6, caractérisé par le fait que le manchon (34,34′) est en appui sur la bague extérieure (18,18′) du roulement par l'intermédiaire d'un flasque (28,28′) fixé sur la pièce extérieure, le manchon et le flasque coopérant par des portées coniques complémentaires (28a, 34a ; 28′a, 34′a).

8. Mécanisme selon l'une quelconque des revendications 4 à 7, caractérisé par le fait que le manchon (34,34′) comporte un alésage (34b,34′b) qui coopère avec une une portée cylindrique (10c,10′c) formée sur une partie du prolongement de la pièce intérieure, située à proximité immédiate du roulement (14,14′).

9. Mécanisme selon l'une quelconque des revendications 2 à 8, caractérisé par le fait que la bague extérieure (18,18′) du roulement est montée dans un alésage (12a,12′a) de la pièce extérieure par l'intermédiaire d'un joint élastique (44,44′) de découplage.

10. Mécanisme selon l'une quelconque des revendications 2 à 9, caractérisé par le fait qu'il comprend deux roulements (14,14′) comportant chacun une bague extérieure (18,18′) et une bague intérieure (16,16′) ; deux moyens de gerbage (32,32′) montés en opposition et agissant directement entre chacune des bagues extérieures (18,18′) et la pièce intérieure (10) sur laquelle est fixée l'une (16) des bagues intérieures, l'autre bague intérieure (16′) étant apte à glisser axialement sur la pièce intérieure ; et deux organes (46,46′) en matériau à mémoire de forme, respectivement associés à chacun des moyens de gerbage.

## Claims

1. Rotary mechanism for a space vehicle, comprising an inner part (10) and an outer part (12) which can be given, during a vehicle launch phase, a relative rotary movement, said mechanism incorporating stacking means (32, 32') preventing any relative rotation between said parts during the launch phase and means (46, 46') for releasing the stacking means after the launch phase, characterized in that the release means comprise a member (46, 46') made from a shape memory material controlling the release of the stacking means on clearing a crystalline structure change temperature of said material.

2. Mechanism according to claim 2, characterized in that at least one bearing (14, 14') incorporating an inner ring (16, 16') and an outer ring (18, 18') is placed between the said parts (10, 12), so that the stacking means (32, 32') act directly on the inner and outer rings of said bearing.

3. Mechanism according to claim 2, characterized in that the bearing (14, 14') is a ball bearing.

4. Mechanism according to either of the claims 2 and 3, characterized in that the stacking means (32, 32') comprise a sleeve (34, 34') arranged concentrically around an extension (10b, 10'b) of the inner part (10), so as to be axially compressed between the outer ring (18, 18') of the bearing and locking means (36, 36') bearing on the inner part, which supports the inner ring of the bearing.

5. Mechanism according to claim 4, characterized in that the shape memory material member (46, 46') is fitted between the sleeve (34, 34') and the extension (10b, 10'b) of the inner part, so as to bear on said extension in order to control its elongation on clearing said phase change temperature.

6. Mechanism according to claim 5, characterized in that heating means (48, 48') are also placed between the sleeve (34, 34') and the extension (10b, 10'b) of the inner part, in order to ensure that the shape memory material member (46, 46') clears the said temperature when the heating means are put into operation.

7. Mechanism according to any one of the claims 4 to 6, characterized in that the sleeve (34, 34') bears on the outer ring (18, 18') of the bearing via an end plate (28, 28') fixed to the outer part, the sleeve and the end plate cooperating by complimentary conical bearing surfaces (28a, 34a; 28'a, 34'a).

8. Mechanism according to any one of the claims 4 to 7, characterized in that the sleeve (34, 34') has a bore (34b, 34'b) cooperating with a cylindrical bearing surface (10c, 10'c) formed on a portion of the extension of the inner part in the immediate vicinity of the bearing (14, 14').

9. Mechanism according to any one of the claims 2 to 8, characterized in that the outer ring (18, 18') of the bearing is fitted in a bore (12a, 12'a) of the outer part via an elastic decoupling joint (44, 44').

10. Mechanism according to any one of the claims 2 to 9, characterized in that two bearings (14, 14') are provided, each having an outer ring (18, 18') and an inner ring (16, 16'), there are two stacking means (32, 32') fitted in opposition and acting directly between each of the outer rings (18, 18') and the inner part (10) to which is fixed one (16) of the inner rings, the other inner ring (16') being able to slide axially on the inner part and there are two shape memory material members (46, 46') respectively associated with each of the stacking means.

## Patentansprüche

1. Drehmechanismus für Raumfahrzeug, ein Innenteil (10) und ein Außenteil (12) umfassend, denen nach einer Startphase des Raumfahrzeugs eine relative Drehbewegung verliehen werden kann, wobei dieser Mechanismus Stapeleinrichtungen (32,32') umfaßt, die jede relative Drehung zwischen besagten Teilen während der Startphase verhindert, und Einrichtungen (46,46') zur Freisetzung der Stapeleinrichtungen, nach der Startphase,
**dadurch gekennzeichnet**,
daß die Freisetzungseinrichtungen ein Organ (46,46') aus einem Material mit Erinnerungsvermögen umfassen, das beim Überschreiten einer Kristallstrukturveränderungstemperatur dieses Materials die Freigabe der Stapeleinrichtungen steuert.

2. Mechanismus nach Anspruch 1, dadurch gekennzeichnet, daß wenigstens ein Lager (14,14') mit einem Innenring (16,16') und einem Außenring (18,18') zwischen den genannten Teilen (10,12) angeordnet ist, wobei die Stapeleinrichtungen (32,32') direkt auf den Innen- und den Außenring des Lagers wirken.

3. Mechanismus nach Anspruch 2, dadurch gekennzeichnet, daß das Lager (14,14') ein Kugellager ist.

4. Mechanismus nach einem der Ansprüche 2 und 3, dadurch gekennzeichnet, daß die Stapeleinrichtungen (32,32') eine Muffe (34,34') umfassen, konzentrisch um eine Verlängerung (10b,10b') des Innenteils (10) herum angeordnet, so daß sie axial zusammengepreßt wird zwischen dem Außenring (18,18') des Lagers und Spanneinrichtungen (36,36'), am Innenteil zur Anlage kommend, das den Innenring des Lagers trägt.

5. Mechanismus nach Anspruch 4, dadurch gekennzeichnet, daß das Organ (46,46') aus Material mit Formerinnerungsvermögen zwischen der genannten Muffe (34,34') und der Verlängerung (10b,10b') des Innenteils angebracht ist, um auf dieser Verlängerung zur Anlage zu kommen, um bei Überschreitung der besagten Phasenveränderungstemperatur deren Dehnung zu betätigen.

6. Mechanismus nach Anspruch 5, dadurch gekennzeichnet, daß ebenfalls Heizeinrichtungen (48,48') zwischen der Muffe (34,34') und der Verlängerung (10,10') des Innenteils angeordnet sind, um die Überschreitung der besagten Temperatur durch das Organ (46,46') aus Material mit Formerinnerungsvermögen sicherzustellen.

7. Mechanismus nach einem der Ansprüche 4 bis 6, dadurch gekennzeichnet, daß die Muffe (34,34') sich abstützt auf dem Außenring (18,18') des Lagers mittels eines auf dem Außenteil befestigten Flansches (28,28'), wobei die Muffe und der Flansch zusammenwirken über komplementäre konische Auflageflächen (28a, 34a; 28'a, 34'a) .

8. Mechanismus nach einem der Ansprüche 4 bis 7, dadurch gekennzeichnet, daß die Muffe (34,34') eine Bohrung (34b,34b') aufweist, die zusammenwirkt mit einer zylindrischen Auflagefläche (10c,10c'), ausgebildet an einem Teil der Verlängerung des Innenteils in unmittelbarer Nähe zum Lager (14,14').

9. Mechanismus nach einem der Ansprüche 2 bis 8, dadurch gekennzeichnet, daß der Außenring (18,18') des Lagers in einer Bohrung (12,12') des Außenteils angebracht ist mittels eines elastischen Entkupplungsrings (44,44').

10. Mechanismus nach einem der Ansprüche 2 bis 9, dadurch gekennzeichnet, daß er zwei Lager (14,14') umfaßt, von denen jedes einen Außenring (18,18') und einen Innenring (16,16') aufweist; zwei Stapeleinrichtungen (32,32'), entgegengesetzt montiert und direkt wirkend zwischen jedem der Außenringe (18,18') und dem Innenteil (10), auf dem einer (16) der Innenringe befestigt ist, wobei der andere Innenring (16') axial auf dem Innenteil gleiten kann; und zwei Organe (46,46') aus Material mit Formerinnerungsvermögen, jeweils jedem der Stapeleinrichtungen zugeordnet.
